Europäisches Patentamt

(19) European Patent Office

Office européen des brevets

(11) **EP 0 803 519 A1**

(12) **EUROPEAN PATENT APPLICATION**

(43) Date of publication:
29.10.1997 Bulletin 1997/44

(51) Int. Cl.$^6$: **C08F 10/00**, C08F 2/34

(21) Application number: 96430004.0

(22) Date of filing: 26.04.1996

(84) Designated Contracting States:
FR

(71) Applicant: **BP CHEMICALS S.N.C.**
**92400 Courbevoie (FR)**

(72) Inventor: **Chinh, Jean-Claude**
**13920 St Mitre les Remparts (FR)**

(74) Representative: **Lassalle, Pierre-Dominique**
**BP Chemicals S.N.C.,**
**Sce Propriété Industrielle LPID,**
**BP no. 6**
**13117 Lavera (FR)**

(54) **Polymerisation process**

(57) The present invention relates to a continuous gas fluidised bed process for the polymerisation of olefin monomer to produce a polymer product in a fluidised bed reactor comprising:

(1) continuously recycling a gaseous stream withdrawn from said reactor;
(2) cooling at least part of said gaseous stream to a temperature at which liquid condenses out and separating at least part of the condensed liquid from the gaseous stream;
(3) transferring the polymer product to a depressurisation zone, reducing the pressure in the depressurisation zone to separate a gaseous phase (B from a solid phase (C), and pressurising the gaseous phase (B); and
(4) introducing at least part of the separated liquid directly into the fluidised bed using a liquid injection means arranged at or above the point at which the gaseous stream passing through the fluidised bed has substantially reached the temperature of the gaseous stream being withdrawn from the reactor wherein at least part of the pressurised gaseous phase (B) is used to assist in the operation of the liquid injection means.

FIG.1

## Description

The present invention relates to a continuous process for the gas-phase polymerisation of olefins in a fluidised bed reactor, and in particular to a process having improved levels of productivity.

Processes for the homopolymerisation and copolymerisation of olefins in the gas phase are well known in the art. Such processes can be conducted for example by introducing the gaseous monomer into a stirred and/or fluidised bed comprising preformed polyolefin and a catalyst for the polymerisation.

In the fluidised bed polymerisation of olefins, the polymerisation is conducted in a fluidised bed reactor wherein a bed of polymer particles are maintained in a fluidised state by means of an ascending gas stream comprising the gaseous reaction monomer. The start-up of such a polymerisation generally employs a bed of preformed polymer particles similar to the polymer which it is desired to manufacture. During the course of polymerisation, fresh polymer is generated by the catalytic polymerisation of the monomer, and polymer product is withdrawn to maintain the bed at more or less constant volume. An industrially favoured process employs a fluidisation grid to distribute the fluidising gas to the bed, and to act as a support for the bed when the supply of gas is cut off. The polymer produced is generally withdrawn from the reactor via a discharge conduit arranged in the lower portion of the reactor, near the fluidisation grid. A small proportion of the monomer tends to remain associated (absorbed or dissolved) in the polymer product. The unconverted monomers may be recovered from the polymer product in a depressurisation zone and may be recycled either directly or indirectly to the fluidised bed reactor. The fluidised bed comprises a bed of growing polymer particles, polymer product particles and catalyst particles. This reaction mixture is maintained in a fluidised condition by the continuous upward flow from the base of the reactor of a fluidising gas which comprises recycle gas from the top of the reactor together with make-up feed.

The fluidising gas enters the bottom of the reactor and is passed, preferably through a fluidisation grid, to the fluidised bed.

The polymerisation of olefins is an exothermic reaction and it is therefore necessary to provide means to cool the bed to remove the heat of polymerisation. In the absence of such cooling the bed would increase in temperature until, for example, the catalyst became inactive or the bed commenced to fuse. In the fluidised bed polymerisation of olefins, the preferred method for removing the heat of polymerisation is by supplying to the polymerisation reactor a gas, preferably the fluidising gas, which is at a temperature lower than the desired polymerisation temperature, passing the gas through the fluidised bed to conduct away the heat of polymerisation, removing the gas from the reactor and cooling it by passage through an external heat exchanger, and recycling it to the bed. The temperature of the recycle gas can be adjusted in the heat exchanger to maintain the fluidised bed at the desired polymerisation temperature. In this method of polymerising alpha olefins, the recycle gas generally comprises the monomeric olefin, optionally together with, for example, diluent gas and/or a gaseous chain transfer agent such as hydrogen. Thus the recycle gas serves to supply the monomer to the bed, to fluidise the bed, and to maintain the bed at the desired temperature. Monomers consumed by the polymerisation reaction are normally replaced by adding make up gas to the recycle gas stream.

It is well known that the production rate (i.e. the space time yield in terms of weight of polymer produced per unit volume of reactor space per unit time) in commercial gas fluidised bed reactors of the afore-mentioned type is restricted by the maximum rate at which heat can be removed from the reactor. The rate of heat removal can be increased for example, by increasing the velocity of the recycle gas and/or reducing the temperature of the recycle gas. However, there is a limit to the velocity of the recycle gas which can be used in commercial practice. Beyond this limit the bed can become unstable or even lift out of the reactor in the gas stream, leading to blockage of the recycle line and damage to the recycle gas compressor or blower. There is also a limit on the extent to which the recycle gas can be cooled in practice. This is primarily determined by economic considerations, and in practise is normally determined by the temperature of the industrial cooling water available on site. Refrigeration can be employed if desired, but this adds to the production costs. Thus, in commercial practice, the use of cooled recycle gas as the sole means of removing the heat of polymerisation from the gas fluidised bed polymerisation of olefins has the disadvantage of limiting the maximum production rates obtainable.

The prior art suggests a number of methods for removing heat from gas fluidised bed polymerisation processes.

GB 1415442 relates to the gas phase polymerisation of vinyl chloride in a stirred or fluidised bed reactor, the polymerisation being carried out in the presence of at least one gaseous diluent having a boiling point below that of vinyl chloride. Example 1 of this reference describes the control of the temperature of polymerisation by the intermittent addition of liquid vinyl chloride to fluidised polyvinyl chloride material. The liquid vinyl chloride evaporated immediately in the bed resulting in the removal of the heat of polymerisation.

US 3625932 describes a process for polymerisation of vinyl chloride wherein beds of polyvinyl chloride particles within a multiple stage fluidised bed reactor are kept fluidised by the introduction of gaseous vinyl chloride monomer at the bottom of the reactor. Cooling of each of the beds to remove heat of polymerisation generated therein is provided by spraying liquid vinyl chloride monomer into the ascending gas stream beneath the trays on which the beds are fluidised.

FR 2215802 relates to a spray nozzle of the non-return valve type, suitable for spraying liquids into fluidised beds, for example in the gas fluidised bed polymerisation of ethylenically unsaturated monomers. The liquid, which is used for cooling the bed, can be the monomer to be polymerised, or if ethylene is to be polymerised, it can be a liquid saturated hydrocarbon. The spray nozzle is described by reference to the fluidised bed polymerisation of vinyl chloride.

GB 1398965 discloses the fluidised bed polymerisation of ethylenically unsaturated monomers, especially vinyl chloride, wherein thermal control of the polymerisation is effected by injecting liquid monomer into the bed using one or more spray nozzles situated at a height between 0 and 75% of that of the fluidised material in the reactor.

US 4390669 relates to homo- or copolymerisation of olefins by a multi-step gas phase process which can be carried out in stirred bed reactors, fluidised bed reactors, stirred fluidised bed reactors or tubular reactors. In this process polymer obtained from a first polymerisation zone is suspended in an intermediate zone in an easily volatile liquid hydrocarbon, and the suspension so obtained is fed to a second polymerisation zone where the liquid hydrocarbon evaporates. In Examples 1 to 5, gas from the second polymerisation zone is conveyed through a cooler (heat exchanger) wherein some of the liquid hydrocarbon condenses (with comonomer if this is employed). The volatile liquid condensate is partly sent in the liquid state to the polymerisation vessel where it is vaporised for utilisation in removing the heat of polymerisation by its latent heat of evaporation. This reference does not state specifically how the liquid is introduced into the polymerisation.

EP 89691 relates to a process for increasing the space time yield in continuous gas fluidised bed processes for the polymerisation of fluid monomers, the process comprising cooling part or all of the unreacted fluids to form a two phase mixture of gas and entrained liquid below the dew point and reintroducing said two phase mixture into the reactor. This technique is referred to as operation in the "condensing mode". The specification of EP89691 states that a primary limitation on the extent to which the recycle gas stream can be cooled below the dew point is in the requirement that gas-to-liquid be maintained at a level sufficient to keep the liquid phase of the two phase fluid mixture in an entrained or suspended condition until the liquid is vaporised, and further states that the quantity of liquid in the gas phase should not exceed about 20 weight percent, and preferably should not exceed about 10 weight percent, provided always that the velocity of the two phase recycle stream is high enough to keep the liquid phase in suspension in the gas and to support the fluidised bed within the reactor. EP 89691 further discloses that it is possible to form a two-phase fluid stream within the reactor at the point of injection by separately injecting gas and liquid under conditions which will produce a two phase stream, but that there is little advantage seen in operating in this fashion due to the added and unnecessary burden and cost of separating the gas and liquid phases after cooling.

EP173261 relates in particular to improvements in the distribution of fluid introduced into fluidised bed reactors and refers in particular to operation in the condensing mode as described in EP89691 (*supra*). More particularly, EP173261 states that operation using an inlet to the base of the reactor (beneath the distribution plate or grid) of the standpipe/conical cap type (as depicted in the drawings of EP89691) is not satisfactory for a condensing mode of operation due to liquid flooding or frothing in the bottom head, a phenomenon experienced with commercial reactors at relatively low levels of liquid in the recycle stream.

WO 94/28032 relates to a process in which the recycle gas stream is cooled to a temperature sufficient to form a liquid and a gas. By separating the liquid from the gas and then feeding the liquid directly to the fluidised bed, the total amount of liquid which may be reintroduced into the fluidised bed polymerisation reactor for the purpose of cooling the bed by evaporation of the liquid can be increased thereby enhancing the level of cooling to achieve higher levels of productivity. The liquid may be introduced into the fluidised bed by suitably arranged liquid injection means. A gas may be used to assist in the operation of the liquid injection means. Suitable liquid injection means include gas-induced nozzles.

It has now been found that monomer recovered from the polymer product in the depressurisation zone may advantageously be used to assist in the operation of the liquid injection means.

Thus, according to the present invention there is provided a continuous gas fluidised bed process for the polymerisation of olefin monomer selected from (a) ethylene, (b) propylene, (c) mixtures of ethylene and propylene, and (d) one or more other alpha-olefins mixed with (a), (b) or (c) to produce a polymer product in a fluidised bed reactor which process comprises:

(1) continuously recycling a gaseous stream comprising at least some of the olefin monomer through a fluidised bed in said reactor in the presence of a polymerisation catalyst under reactive conditions;

(2) cooling at least part of said gaseous stream withdrawn from said reactor to a temperature at which liquid condenses out and separating at least part of the condensed liquid from the gaseous stream:

(3) transferring the polymer product and any associated olefin monomer together with the polymer product (mixture (A)) to a depressurisation zone, reducing the pressure in the depressurisation zone to separate a gaseous phase (B) comprising olefin monomer from a solid phase (C) comprising the polymer product, and pressurising the gaseous phase (B); and

(4) introducing at least part of the separated liquid directly into the fluidised bed using a liquid injection means arranged at or above the point at which the gaseous stream passing through the fluidised bed has substantially reached the temperature of the gaseous stream being withdrawn from the reactor wherein at least part of the pressurised gaseous phase (B) is used to assist in the operation of the liquid injection means.

Where the term "associated olefin monomer" is used throughout the specification it means unreacted olefin monomer which is absorbed or dissolved in the polymer product, or unreacted olefin monomer in the gaseous stream passing through the fluidised bed, which is withdrawn from the reactor together with the polymer product.

The gaseous recycle stream withdrawn from the reactor generally comprises unreacted gaseous monomer(s), and optionally, inert hydrocarbon(s), reaction activator(s) or moderator(s) such as nitrogen and $C_2$-$C_8$ alkane or cycloalkane, and hydrogen as well as entrained catalyst and polymer particles.

Inert hydrocarbon(s) present in the gaseous stream passing through the fluidised bed may also be associated with (absorbed or dissolved in or withdrawn together with) the polymer product. Providing the inert hydrocarbon(s) is sufficiently volatile the gaseous phase (B) separated in the depressurisation zone will additionally comprise the inert hydrocarbon(s).

Nitrogen and hydrogen, if present in the gaseous recycle stream, will also be associated with the polymer product and therefore comprise part of the gaseous phase (B) separated in the depressurisation zone.

An advantage of the present invention is that by using the gas coming from the depressurisation zone (e.g. a degasser) as assisting gas in the operation of the liquid injection means, the plant required for operating the process is greatly simplified.

The recycled gaseous stream fed to the reactor additionally comprises sufficient make-up monomers to replace those monomers polymerised in the reactor.

The process according to the present invention is suitable for the manufacture of polyolefins in the gas phase by the polymerisation of one or more olefins at least one of which is ethylene or propylene. Preferred alpha-olefins used in combination with ethylene and/or propylene in the process of the present invention are those having from 4 to 8 carbon atoms. However, small quantities of alpha olefins having more than 8 carbon atoms, for example 9 to 18 carbon atoms (e.g. a conjugated diene), can be employed if desired. Thus it is possible to produce homopolymers of ethylene or propylene or copolymers of ethylene and/or propylene with one or more $C_4$-$C_8$ alpha-olefins. The preferred alpha-olefins are but-1-ene, pent-1-ene, hex-1-ene, 4-methylpent-1-ene, oct-1-ene and butadiene. Examples of higher olefins that can be copolymerised with the primary ethylene and/or propylene monomer, or as partial replacement for the $C_4$-$C_8$ monomer are dec-1-ene and ethylidene norbornene.

When the process is used for the copolymerisation of ethylene or propylene with alpha-olefins the ethylene or propylene is present as the major component of the monomers, and preferably is present in an amount at least 50%, more preferably at least 70% of the total monomers.

The process according to the present invention may be used to prepare a wide variety of polymer products for example linear low density polyethylene (LLDPE) based on copolymers of ethylene with but-1-ene, 4-methylpent-1-ene or hex-1-ene and high density polyethylene (HDPE) which can be for example, homopolyethylene or copolymers of ethylene with a small portion of higher alpha olefin, for example, but-1-ene, pent-1-ene, hex-1-ene or 4-methylpent-1-ene.

The liquid which condenses out of the recycle gaseous stream can be a condensable monomer, e.g. but-1-ene, hex-1-ene, octene used as a comonomer for the production of LLDPE or may be an inert condensable liquid, e.g. inert hydrocarbon(s), such as $C_4$-$C_8$ alkane(s) or cycloalkane(s), particularly butane, pentane or hexane.

It is important that the liquid should vaporise within the bed under the polymerisation conditions being employed so that the desired cooling effect is obtained and to avoid substantial accumulation of liquid within the bed. Suitably at least 95, preferably at least 98 weight percent and most preferably substantially all of the liquid fed to the bed evaporates therein. In the case of liquid comonomers, some of the comonomer polymerises in the bed, and such polymerisation can be from the liquid and the gas phase. Associated olefin monomer can readily be tolerated within the bed provided that the quantities do not adversely affect the fluidisation characteristics of the bed.

The process is particularly suitable for polymerising olefins at an absolute pressure of between 0.5 and 6 MPa and at a temperature of between 30°C and 130°C. For example for LLDPE production the temperature is suitably in the range 80-95°C and for HDPE the temperature is typically 85-110°C depending on the activity of the catalyst used.

The polymerisation reaction may be carried out in the presence of a catalyst system of the Ziegler-Natta type, consisting of a solid catalyst essentially comprising a compound of a transition metal and of a cocatalyst comprising an organic compound of a metal (i.e. an organometallic compound, for example an alkylaluminium compound). High-activity catalyst systems have already been known for a number of years and are capable of producing large quantities of polymer in a relatively short time, and thus make it possible to avoid a step of removing catalyst residues from the polymer. These high-activity catalyst systems generally comprise a solid catalyst consisting essentially of atoms of transition metal, of magnesium and of halogen. The process is also suitable for use with metallocene catalysts and Ziegler catalysts supported on silica. It is also possible to use a high-activity catalyst consisting essentially of a chromium oxide activated by a heat treatment and associated with a granular support based on a refractory oxide.

The catalyst may suitably be employed in the form of a prepolymer powder prepared beforehand during a prepolymerisation stage with the aid of a catalyst as described above. The prepolymerisation may be carried out by any suitable process, for example, polymerisation in a liquid hydrocarbon diluent or in the gas phase using a batch process, a semi-continuous process or a continuous process.

The transfer of the polymer product and associated olefin monomer optionally with inert hydrocarbons/hydrogen/nitrogen (mixture (A)) may be performed continuously or, preferably, semi-continuously or intermittently, for example by isolating a predetermined volume of the mixture (A) withdrawn from the reactor in an intermediate chamber fitted with valves, before transferring the mixture into the depressurisation zone. This may, in particular, be performed according to the method described in European Patent Application No. 0 250 169. The transfer is essentially achieved owing to a difference in pressure between the reactor and the depressurisation zone. The absolute pressure in the depressurisation zone is in the region of ambient atmospheric pressure, preferably an absolute pressure of 0.1 to 0.4 MPa, more preferably from 0.1 to 0.3 MPa, most preferably from 0.11 to 0.25 MPa.

Separation of the mixture (A) into a gaseous phase (B) comprising associated olefin monomer optionally with inert hydrocarbons/hydrogen/nitrogen and a solid phase (C) may be carried out continuously and may take place by the pressure reduction in the depressurisation zone, which pressure is brought to the above mentioned level. During the separation of the mixture (A), the temperature of the depressurisation zone is in the region of that prevailing in the polymerisation zone or slightly below this. The gaseous phase (B) may be separated from the solid phase (C) by the solid phase (C) flowing out of the depressurisation zone, for example under gravity. Thus, the solid phase (C) may be recovered in the lower part of the depressurisation zone. The gaseous phase (B) may comprise part of the gaseous stream passing through the fluidised bed which accompanies the polymer product during its transfer, as well as the constituents of the gaseous stream which are initially absorbed/dissolved in the polymer product and which are progressively degassed during the transfer and the separation in the depressurisation zone.

The solid phase (C) separated from the gaseous phase (B) may comprise the polymer product of the mixture (A) with a smaller amount of associated olefin monomer optionally with inert hydrocarbons/hydrogen/nitrogen. Generally, the average residence time of the polymer product in the depressurisation zone is preferably relatively short, because the polymer contains active catalytic residues in an active polymerisation atmosphere. The average residence time may suitably be from a few seconds to a few minutes, for example from 5 to 600 seconds, preferably from 10 to 300, most preferably from 30 to 200 seconds.

Suitably, the gaseous phase (B) is pressurised using a compressor. The gaseous phase (B) is pressurised to a pressure greater than the pressure in the fluidised bed reactor, preferably to an absolute pressure which is between 0.1 to 1 MPa greater than the absolute pressure in the fluidised bed reactor, more preferably between 0.3 to 0.7 MPa.

Suitably, a filter is situated in the upper part of the depressurisation zone or before the compressor to remove any fine polymer particles which are entrained in the gaseous phase (B).

Suitably, the pressurised gaseous phase (B) is passed through a cooler to remove the heat of compression, before being used to assist in the operation of the liquid injection means. The pressurised gaseous phase (B) may be cooled above or below the dew point; it is preferred to cool it slightly above the dew point.

The preferred process according to the present invention is one wherein substantially the whole of the pressurised gaseous phase (B) is used to assist in the operation of the liquid injection means.

Optionally, make-up olefin monomer, (e.g. ethylene or propylene), and/or an inert gas (e.g. nitrogen), and/or an inert hydrocarbon (e.g. ethane) may be combined with the gaseous phase (B) and the resulting combined gaseous stream is used to assist in the operation of the liquid injection means.

The recycle gaseous stream is suitably cooled by means of a heat exchanger or exchangers to a temperature such that liquid is condensed in the gas stream. Suitable heat exchangers are well known in the art.

The gaseous stream leaving the top of the reactor can entrain a quantity of catalyst and polymer particles and these may be removed if desired from the recycle gaseous stream by means of a cyclone. A small proportion of these particles or fines may remain entrained in the recycle gaseous stream and, after cooling and separating the liquid from the gas, the fines can, if desired, be reintroduced into the fluidised bed together with the separated liquid stream.

The recycle gas stream may also comprise inert hydrocarbons used for the injection of catalyst, reaction activators or moderators into the reactor.

Make-up monomers for example ethylene to replace monomers consumed by the polymerisation reaction may be added to the recycle gas stream at any suitable location.

Condensable monomers, for example, but-1-ene, hex-1-ene, 4-methylpent-1-ene and octene, which can, for example, be used as comonomers for the production of LLDPE, or inert condensable liquids, for example, pentane, isopentane, butane and hexane, may be introduced as liquids.

Inert condensable liquids, for example, pentane may for example be injected into the recycle gaseous stream between the heat exchanger and the separator. For the preparation of LLDPE, the comonomer, for example, but-1-ene can, if desired, be injected into the recycle gaseous stream before passage to the heat exchanger.

Suitable means for separating the liquid are for example cyclone separators, large vessels which reduce the velocity of the gas stream to effect separation (knock-out drums), demister type gas-liquid separators and liquid scrubbers, for example, venturi scrubbers. Such separators are well known in the art.

The use of a demister type of gas-liquid separator is particularly advantageous in the process of the present invention.

The use of a cyclone separator in the recycle gas stream, prior to the gas-liquid separator is preferred. This removes the majority of the fines from the gaseous stream leaving the reactor thereby facilitating the use of a demister separator and also reducing the possibility of fouling of the separator resulting in a more efficient operation.

A further advantage of using a demister type of separator is that the pressure drop within the separator can be lower than in other types of separators thereby enhancing the efficiency of the overall process.

A plurality of liquid injection means may be used to introduce the separated liquid into the fluidised bed. The liquid injection means are arranged such that the local concentration of liquid does not adversely affect the fluidisation of the bed or the quality of the product, and to enable the liquid to disperse rapidly from each liquid injection means and vaporise in the bed to remove the heat of polymerisation from the exothermic reaction. In this way the amount of liquid introduced for cooling purposes may much more closely approach the maximum loading that can be tolerated without disturbing the fluidisation characteristics of the bed and hence offers the opportunity to achieve enhanced levels of reactor productivity.

The liquid can, if desired, be introduced into the fluidised bed using liquid injection means arranged at different heights within the bed. Such a technique can facilitate improved control over comonomer incorporation. Controlled metering of liquid into the fluidised bed provides useful additional control over the temperature profile of the bed and, in the case that the liquid contains comonomer, provides useful control over the comonomer incorporation into the copolymer.

The liquid injection means or plurality of injections means are preferably arranged in the lower part of the region of the fluidised bed at which the recycle gaseous stream has substantially reached the temperature of the gaseous stream being withdrawn from the reactor. Commercial processes for the gas fluidised bed polymerisation of olefins are generally operated under substantially isothermal, steady state conditions. However, although at least a major portion of the fluidised bed is maintained at the desired substantially isothermal polymerisation temperature, there normally exists a temperature gradient in the region of the bed immediately above the point of introduction of the cooled recycle gaseous stream into the bed. The lower temperature limit of this region wherein the temperature gradient exists is the temperature of the incoming cool recycle gas stream, and the upper limit is the substantially isothermal bed temperature. In commercial reactors of the type which employ a fluidisation grid, this temperature gradient normally exists in a layer of about 15 to 30 cm (6 to 12 inches) above the grid.

In order to gain the maximum benefit of the cooling of the separated liquid it is important that the liquid injection means is arranged in the bed above the region where this temperature gradient exists, i.e. in the part of the bed which has substantially reached the temperature of the gaseous stream leaving the reactor.

The liquid injection means may for example be approximately 50-70 cm above the fluidisation grid.

It is important to ensure that the temperature within the fluidised bed is maintained at a level which is below the sintering temperature of the polyolefin constituting the bed.

The gas from the separator is recycled to the bed, normally into the bottom of the reactor. If a fluidisation grid is employed, such recycle is normally to the region below the grid, and the grid facilitates uniform distribution of the gas to fluidise the bed. The use of a fluidisation grid is preferred.

The gas velocity in the fluidised bed must be greater than or equal to that required for fluidisation of the bed. The minimum gas velocity is generally approximately 6 cm/sec but the process of the present invention is preferably carried out using a gas velocity in the range 40 to 100, most preferably 50 to 70 cm/sec.

The catalyst or prepolymer can, if desired, be introduced into the fluidised bed directly with the separated liquid stream. This technique can lead to improved dispersion of the catalyst or prepolymer in the bed.

If desired, liquid or liquid-soluble additives, for example, activators, cocatalysts and the like, can be introduced into the bed together with the condensed liquid.

Where the polymer product is an ethylene homo- or copolymer, make-up ethylene, for example, to replace the ethylene consumed during the polymerisation, may be advantageously introduced into the separated gas stream prior to its reintroduction into the bed (for example below the fluidisation grid if such is employed). By adding the make-up ethylene to the separated gas stream rather than into the recycle gaseous stream before separation, the quantity of liquid which may be recovered from the separator may be increased and the productivity improved.

The separated liquid stream may be subjected to additional cooling (e.g. using refrigeration techniques) before being introduced into the fluidised bed. This allows an even greater cooling effect in the bed than is provided by the liquid evaporative effect (latent heat of evaporation) alone, thereby providing further potential increases in productivity of the process. Cooling of the separated liquid stream may be achieved by use of suitable cooling means e.g. a simple heat exchanger or refrigerator located between the separator and the reactor. By cooling the liquid before introduction into the fluidised bed, any tendency for catalyst or prepolymer which may be contained in the liquid stream to cause polymerisation before introduction into the bed will be reduced.

A preferred arrangement for introduction of the liquid to the fluidised bed is to provide a plurality of liquid injection means substantially equally spaced in the fluidised bed in the region of the introduction of the liquid. The number of liquid injection means used is that number which is required to provide sufficient penetration and dispersion of liquid at each liquid injection means to achieve good dispersion of liquid across the bed. A preferred number of liquid injection means is four.

Each of the liquid injection means may, if desired, be supplied with the separated liquid by means of a common conduit suitably arranged within the reactor. This can be provided, for example, by means of a conduit passing up through the centre of the reactor.

The liquid injection means are preferably arranged such that they protrude substantially vertically into the fluidised bed, but may be arranged such that they protrude from the walls of the reactor in a substantially horizontal direction.

The rate at which the liquid can be introduced into the bed depends primarily on the degree of cooling desired in the bed, and this in turn depends on the desired rate of production from the bed. The rates of production obtainable from commercial fluidised bed polymerisation processes for the polymerisation of olefins depend, _inter alia_ on the activity of the catalysts employed, and on the kinetics of such catalysts. Thus for example, when catalysts having very high activity are employed, and high production rates are desired, the rate of liquid addition will be high. Typical rates of liquid introduction may be, for example, in the range 0.3 to 4.9 cubic metres of liquid per cubic metre of bed material per hour, or even higher. For conventional Ziegler catalysts of the "superactive" type (i.e. those based on transition metal, magnesium halide and organometallic cocatalyst, the rate of liquid addition may be, for example, in the range 0.5 to 1.5 cubic metres of liquid per cubic metre of bed material per hour.

In the process of the present invention the weight ratio of liquid:total gas which may be introduced into the bed can be for example in the range 1:100 to 2:1, preferably in the range 5:100 to 85:100, most preferably about 5:15. By total gas is meant the gas which is returned to the reactor to fluidise the bed together with the gaseous phase (B) used to assist in the operation of the liquid injection means.

By injecting the liquid into the fluidised bed in this way any catalyst which is present in the liquid may benefit from the localised cooling effect of the liquid penetration surrounding each liquid injection means which may avoid hot spots and consequent agglomeration.

The preferred liquid injection means is a nozzle or a plurality of nozzles which include gas-induced atomising nozzles in which gaseous phase (B) is used to assist in the injection of the liquid.

According to another aspect of the present invention there is provided a continuous gas fluidised bed process for the polymerisation of olefin monomer selected from (a) ethylene, (b) propylene, (c) mixtures of ethylene and propylene, and (d) one or more other alpha-olefins mixed with (a), (b) or (c) to produce a polymer product in a fluidised bed reactor which process comprises:

(1) continuously recycling a gaseous stream comprising at least some of the olefin monomer through a fluidised bed in said reactor in the presence of a polymerisation catalyst under reactive conditions;
(2) cooling at least part of the said gaseous stream withdrawn from said reactor to a temperature at which liquid condenses out and separating at least part of the condensed liquid from the gaseous stream;
(3) transferring the polymer product and any olefin monomer which is absorbed or dissolved in or withdrawn together with the polymer product (mixture (A)) to a depressurisation zone, reducing the pressure in the depressurisation zone to separate a gaseous phase (B) comprising olefin monomer from a solid phase (C) comprising the polymer product, and pressurising the gaseous phase (B); and
(4) introducing at least part of the separated liquid directly into the fluidised bed using one or more gas-induced atomising nozzles arranged at or above the point at which the gaseous stream passing through the fluidised bed has substantially reached the temperature of the gaseous stream being withdrawn from the reactor in which the gas fed to the nozzle comprises at least part of the pressurised gaseous phase (B).

The liquid injection means are suitably nozzles which protrude into the bed through the reactor wall (or through a supporting grid for the bed) and which carry one or more jet outlets to deliver the liquid to the bed.

It is important in the process of the present invention to achieve good dispersion and penetration of the liquid in the bed. Factors which are important in achieving good penetration and dispersion are the momentum and direction of the liquid entering the bed, the number of points of introduction of the liquid per unit cross-sectional area of the bed, and the spatial arrangement of the points of introduction of the liquid.

A further aspect of the present invention provides a process for the polymerisation of olefin monomer, the olefin monomer preferably being selected from (a) ethylene, (b) propylene, (c) mixtures of ethylene and propylene, and (d) one or more other alpha-olefins mixed with (a), (b) or (c) to produce a polymer product in a fluidised bed reactor which process comprises:

(1) continuously recycling a gaseous stream comprising the olefin monomer through a fluidised bed in said reactor in the presence of a polymerisation catalyst under reactive conditions;
(2) cooling at least part of the said gaseous stream withdrawn from said reactor to a temperature at which liquid condenses out and separating at least part of the condensed liquid from the gaseous stream;
(3) transferring the polymer product and any olefin monomer which is absorbed or dissolved in or withdrawn together with the polymer product (mixture (A)) to a depressurisation zone, reducing the pressure in the depressurisation zone to separate a gaseous phase (B) comprising olefin monomer from a solid phase (C) comprising the polymer product, and pressurising the gaseous phase (B);
(4) introducing at least part of the separated liquid directly into the fluidised bed at or above the point at which the gaseous stream passing through the fluidised bed has substantially reached the temperature of the gaseous stream being withdrawn from the reactor, said liquid being introduced into said reactor as one or more jets of liquid and gas, from one or more jet outlets, each jet having a horizontal momentum flux of at least $200 \times 10^3$ Kg s$^{-1}$ m$^{-2}$ x m s$^{-1}$ wherein the horizontal momentum flux is defined as the mass flow rate of liquid (kilograms per second) in the horizontal direction per unit cross-sectional area (square metres) of the jet outlet from which it emerges, multiplied by the horizontal component of the velocity (metres per second) of the jet, in which the gas supply to the jets is the pressurised gaseous phase (B) previously separated from the solid phase (C) in the depressurisation zone.

Preferably the momentum flux of each of the liquid/gas jets is at least $250 \times 10^3$ and most preferably at least $300 \times 10^3$ Kg s$^{-1}$ m$^{-2}$ x m s$^{-1}$. Particularly preferred is the use of a horizontal momentum flux in the range $300 \times 10^3$ to $500 \times 10^3$ Kg s$^{-1}$ m$^{-2}$ x m s$^{-1}$. In the case that the liquid jet emerges from the jet outlet in a direction other than horizontal, the horizontal component of the velocity of the jet is calculated from Cosine Q° x actual jet velocity, wherein Q° is the angle the jet makes with the horizontal.

The direction of motion of the one or more liquid/gas jets into the bed is preferably substantially horizontal. In the case that one or more of the jet outlets deliver the liquid/gas jets in a direction other than horizontal, preferably these are directed at an angle not greater than 45°, most preferably not more than 20° to the horizontal.

The one or more nozzles are suitably each equipped with one or more jet outlets. The number of nozzles, and the number and distribution of the jet outlets are important factors in obtaining good distribution of liquid within the bed. If a plurality of nozzles are employed, they are preferably vertically disposed and spaced horizontally and substantially equidistant from one another. In this case, they are also preferably spaced equidistant from one another and from the vertical wall of the fluidised bed. The number of nozzles per 10 square metres of the horizontal cross-sectional area of the bed is preferably in the range 1 to 4, most preferably in the range 2 to 3. Where the calculated number is not an integer, it is preferably rounded tip to an integer. The number of jet outlets in each nozzle is preferably in the range 1 to 40 most preferably in the range 3 to 16. In the case that the nozzle contains more than one jet outlet, the jet outlets are preferably arranged circumferentially and equidistant from one another around the nozzle.

The pressurised gaseous phase (B) used in the operation of the liquid/gas jets may be employed to atomise the liquid, or to provide motive force to propel the liquid.

A suitable gas-induced atomising nozzle for use in the process according to the present invention comprises

(a) at least one inlet for a pressurised liquid,
(b) at least one inlet for the pressurised gaseous phase (B),
(c) a mixing chamber to mix said liquid and gaseous phase, and
(d) at least one outlet through which said mixture is discharged.

Each nozzle may be provided with a plurality of outlets of suitable configuration. The outlets may for example comprise circular holes, slots, ellipsoids or other suitable configurations. Each nozzle may comprise a plurality of outlets of varying configuration.

The size of the outlets is preferably such that there is little pressure drop through the outlets.

The outlets are preferably symmetrically arranged around the circumference of each nozzle but may also be arranged asymmetrically therein.

The pressurised gaseous phase (B) supplied to each nozzle is maintained at a pressure sufficient to break the liquid into small droplets and to prevent particle ingress from the fluidised bed or particle blockage of the outlets of the nozzle.

The relative size of the mixing chamber is arranged to ensure optimum atomisation. The volume of the mixing (atomising) chamber relative to the volume of liquid passing through the chamber expressed as: Volume of mixing chamber (in cubic cm)/ Liquid flowrate (cubic cm per second), is preferably in the range $5 \times 10^{-3}$ to $5 \times 10^{-1}$ seconds.

The velocity of the liquid is preferably maintained at a velocity sufficient to ensure that any particles, for example fines, do not separate out of the liquid stream.

The weight ratio of pressurised gaseous phase (B) (comprising any optional make-up ethylene and/or inert gas) to liquid supplied to each nozzle is typically in the range 5:95 to 25:75.

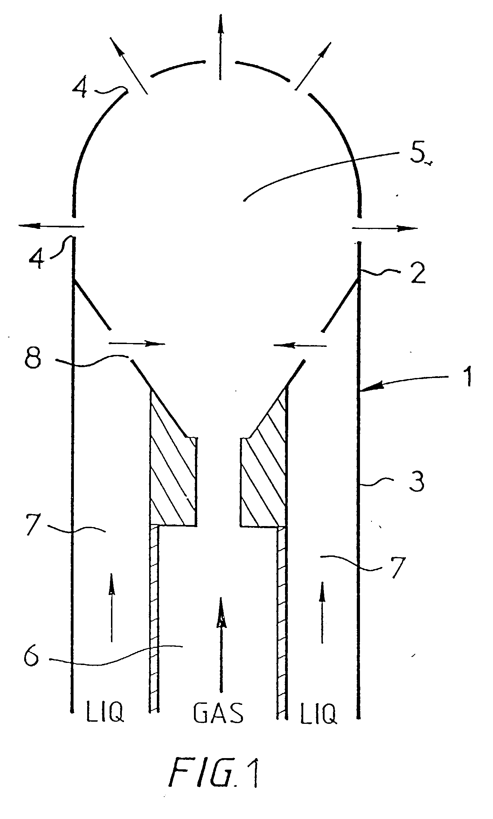

Figure 1 represents a nozzle suitable for use in the process according to the present invention.

In the Figure the nozzle comprises a housing 1 comprising an upper region 2 and a lower region 3. The upper region is provided with a number of outlets 4 arranged on its circumference and a mixing chamber 5 arranged therein. The lower region is provided with a centrally located conduit 6 opening into the mixing chamber and an outer conduit 7 located around the inner conduit. The conduit 7 communicates with the mixing chamber by suitably arranged openings 8. Pressurised liquid is supplied to the nozzle by conduit 7 and pressurised gaseous phase (B) is supplied to conduit 6. The lower region of the nozzle 3 is connected by conventional means to a supply of pressurised liquid and pressurised gaseous phase (B). After mixing with the pressurised gaseous phase (B) in the chamber 5 the liquid is discharged from the nozzle via the outlets 4 as an atomised spray.

A preferred gas-induced atomiser nozzle is one wherein the outlets comprise a series of substantially horizontal slots arranged around the circumference of the nozzle. The nozzle may also comprise a vertically orientated hole or holes located to ensure that any particles adhering to the top of the nozzle may be removed by the pressurised gas-liquid mixture.

The slots may typically be of a size equivalent to a hole of diameter of about 5.8 mm and may for example be of dimension 7.5 mm x 3.5 mm.

The droplet size of the liquid is influenced by a number of factors in particular in the gas-induced atomiser nozzles by the ratio of the liquid to pressurised gaseous phase (B) supplied to the nozzle and the size and configuration of the atomising chamber. A desirable liquid droplet size for a gas-induced atomiser nozzle is from about 50 micron to about 1000 microns.

The pressure drop in the nozzle must be sufficient to prevent the ingress of particles from the fluidised bed. This may be achieved by ensuring that the gaseous phase (B) is pressurised to a pressure greater than the pressure in the fluidised bed reactor, as discussed above. In the gas-induced atomiser nozzle the pressure drop is suitably in the range 0.2 to 0.7, preferably 0.3 to 0.5 MPa.

In the event of a failure in the supply of pressurised gaseous phase to the nozzles suitable means are arranged to provide for an emergency gas purge to prevent blockage of the nozzle by the ingress of particles from the fluidised bed. A suitable purging gas is nitrogen.

It is important that the outlets of the gas-induced atomising nozzles are of sufficient size to allow for the passage of any fines which may be present in the separated liquid stream.

The outlets may be arranged at different levels within each nozzle. For example the outlets may be arranged in a series of rows.

In the type of nozzle illustrated in Figure 1, the number of outlets on each nozzle is preferably between 4 and 40, for example between 20 and 40, most preferably from 4 to 16. The diameter of such a nozzle is preferably in the range 4 to 30 cm, e.g. 10 to 30 cm, and is most preferably of approximately 7 to 12 cm.

Processes according to the present invention will now be illustrated with reference to the accompanying drawings.

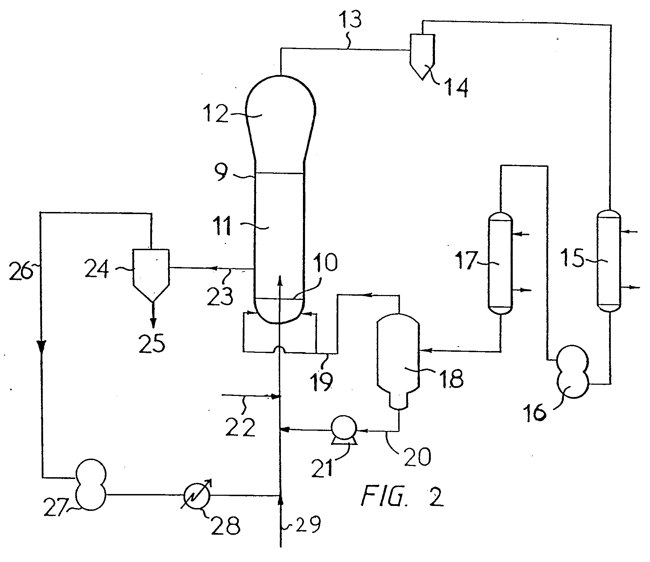

Figures 2-4 show diagrammatically processes according to the present invention.

Figure 2 illustrates a gas-phase fluidised bed reactor consisting essentially of a reactor body 9 which is generally an upright cylinder having a fluidisation grid 10 located in its base. The reactor body comprises a fluidised bed 11 and a velocity reduction zone 12 which is generally of increased cross-section compared to the fluidised bed.

The gaseous reaction mixture leaving the top of the fluidised bed reactor constitutes recycle gaseous stream and is passed via line 13 to a cyclone 14 for the separation of the majority of the fines. Removed fines may suitably be returned to the fluidised bed. The recycle gaseous stream leaving the cyclone passes to a first heat exchanger 15 and a compressor 16. A second heat exchanger 17 is present to remove the heat of compression after the recycle gaseous stream has passed through the compressor 16 and also to cool the recycle stream to a temperature such that a condensate is formed.

The heat exchanger or exchangers can be arranged either upstream or downstream of the compressor 16.

After compression and cooling to a temperature such that a condensate is formed, the resultant gas-liquid mixture is passed to the separator 18 where the liquid is removed.

The gas leaving the separator is recycled via line 19 to the bottom of the reactor 9. The gas is passed via the fluidisation grid 10 to the bed thereby ensuring that the bed is maintained in a fluidised condition.

The separated liquid from the separator 18 is passed via line 20 to the reactor 9. A pump 21 is suitably located in line 20.

Catalyst or prepolymer are fed to the reactor via line 22 into the separated liquid stream.

Product polymer particles and associated olefin monomer/inert hydrocarbons/hydrogen/nitrogen are removed from the reactor via line 23 and transferred to depressurisation zone 24 where polymer product is withdrawn from outlet 25. A gaseous stream comprising olefin monomer is passed via line 26 through compressor 27 and cooler 28 (to remove the heat of compression) and assists in the operation of the liquid injection means (not shown). Make-up olefin monomer and/or inert gas are introduced via line 29 and combined with the pressurised gaseous phase (B). A filter (not shown) is situated either in the upper part of the depressurisation zone 24 or before the compressor in order to remove any entrained fine polymer particles.

The arrangement shown in Figure 2 is particularly suitable for use when retrofitting existing gas phase polymerisation reactors using fluidised bed processes.

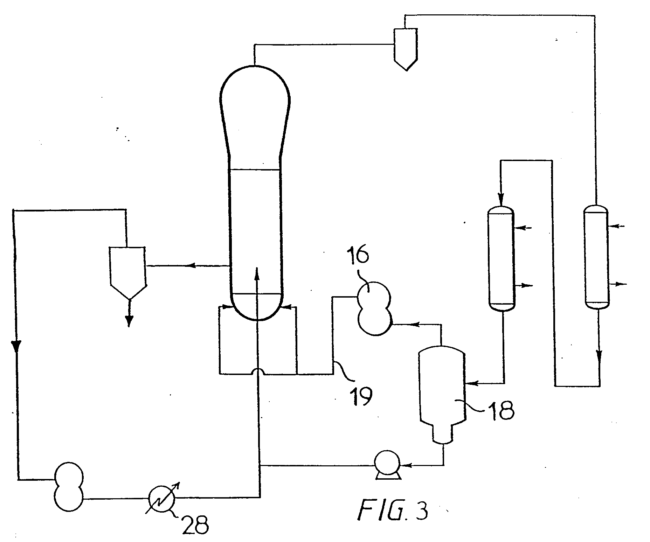

Figure 3 illustrates an alternative arrangement for performing the process of the present invention. In this arrangement the compressor 16 is located in line 19 after separation of the recycle gaseous stream by the separator 18. This has the advantage that the compressor has a reduced quantity of gas to compress and can therefore be of reduced size achieving a better process optimisation and cost.

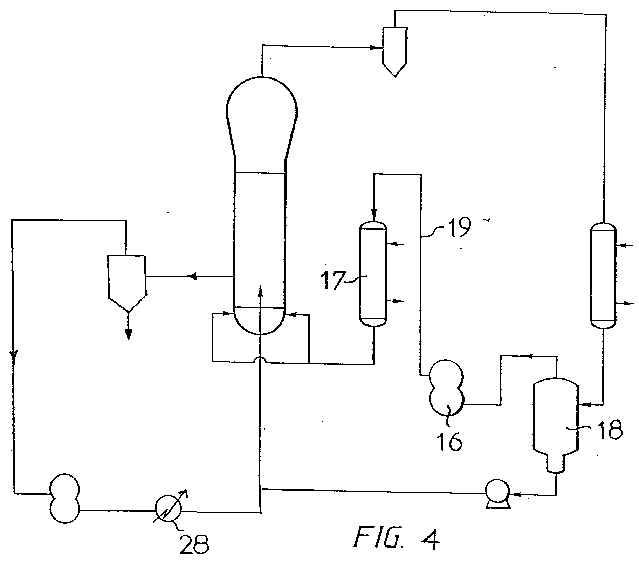

Figure 4 illustrates a further arrangement for performing the process of the present invention whereby the compressor 16 is again arranged in line 19 after the separator 18 but before the second heat exchanger 17 which is located in the separated gas stream rather than located before the separator. Again this arrangement gives a better process optimisation.

**Claims**

1. Continuous gas fluidised bed process for the polymerisation of olefin monomer selected from (a) ethylene, (b) propylene, (c) mixtures of ethylene and propylene, and (d) one or more other alpha-olefins mixed with (a), (b) or (c) to produce a polymer product in a fluidised bed reactor which process comprises:

   (1) continuously recycling a gaseous stream comprising at least some of the olefin monomer through a fluidised bed in said reactor in the presence of a polymerisation catalyst under reactive conditions;
   (2) cooling at least part of said gaseous stream withdrawn from said reactor to a temperature at which liquid condenses out and separating at least part of the condensed liquid from the gaseous stream;
   (3) transferring the polymer product and any associated olefin monomer together with the polymer product (mixture (A)) to a depressurisation zone, reducing the pressure in the depressurisation zone to separate a gaseous phase (B) comprising olefin monomer from a solid phase (C) comprising the polymer product, and pressurising the gaseous phase (B); and
   (4) introducing at least part of the separated liquid directly into the fluidised bed using a liquid injection means arranged at or above the point at which the gaseous stream passing through the fluidised bed has substantially reached the temperature of the gaseous stream being withdrawn from the reactor wherein at least part of the pressurised gaseous phase (B) is used to assist in the operation of the liquid injection means.

2. A process according to claim 1 wherein the one or more other alpha-olefins have from 4 to 8 carbon atoms.

3. A process according to any one of the preceding claims wherein the gaseous phase (B) is pressurised to an absolute pressure which is between 0.1 to 1 MPa greater than the absolute pressure in the fluidised bed reactor.

4. A process according to any one of the preceding claims wherein a filter is situated in the upper part of the depressurisation zone or before the compressor to remove any fine polymer particles which are entrained in the gaseous phase (B).

5. A process according to any one of the preceding claims wherein the pressurised gaseous phase (B) is passed through a cooler to remove the heat of compression, before being used to assist in the operation of the liquid injection means.

6. A process according to any one of the preceding claims wherein substantially the whole of the pressurised gaseous phase (B) is used to assist in the operation of the liquid injection means.

7. A process according to any one of the preceding claims wherein make-up olefin monomer and/or an inert gas are combined with the gaseous phase (B) and the resulting combined gaseous stream is used to assist in the operation of the liquid injection means.

8. A process according to any one of the preceding claims wherein the liquid injection means consists of one or more gas-induced atomising nozzles.

9. A process according to claim 8 wherein the gas-induced atomising nozzle comprises

   (a) at least one inlet for a pressurised liquid,
   (b) at least one inlet for the pressurised gaseous phase (B),
   (c) a mixing chamber to mix said liquid and gaseous phase, and
   (d) at least one outlet through which said mixture is discharged.

10. A process according to any of claims 8 or 9 wherein the weight ratio of pressurised gaseous phase (B) to liquid supplied to each nozzle is in the range 5:95 to 25:75.

FIG.1

*FIG.* 2

FIG. 3

FIG. 4

**European Patent Office**

**EUROPEAN SEARCH REPORT**

Application Number

EP 96 43 0004

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | WO-A-94 28032 (BP CHEMICALS LTD.) <br> * claims 1-33 * <br> --- | 1 | C08F10/00 <br> C08F2/34 |
| A | WO-A-96 10590 (EXXON CHEMICAL PATENTS INC.) <br> * page 11, line 27 - page 13, line 29; claims 1-14; figure 1 * <br> --- | 1 | |
| A | US-A-5 453 471 (R. J. N. BERNIER) <br> * column 4 - column 7; claims 1-14; figure 1 * <br> --- | 1 | |
| D,A | EP-A-0 241 947 (UCC) <br> * claims 1-16; figure 1 * <br> --- | 1 | |
| A | EP-A-0 683 176 (BP CHEMICALS S.N.C.) <br> * claims 1-14 * <br> ----- | 1 | |
| | | | TECHNICAL FIELDS SEARCHED (Int.Cl.6) <br><br> C08F |

The present search report has been drawn up for all claims

| Place of search | Date of completion of the search | Examiner |
|---|---|---|
| THE HAGUE | 27 September 1996 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document